# EUROPÄISCHE PATENTSCHRIFT

(11) **EP 1 540 369 B1**
(45) Veröffentlichungstag und Bekanntmachung des Hinweises auf die Patenterteilung: **20.12.2017**
(21) Anmeldenummer: 03753400.5
(22) Anmeldetag: 10.09.2003
(51) Int. Cl.: G01S 7/41, G01S 13/93

(54) **VERFAHREN UND VORRICHTUNG ZUR ERKENNUNG VON HINDERNISSEN UND/ODER VERKEHRSTEILNEHMERN**
METHOD AND DEVICE FOR RECOGNISING OBSTACLES AND/OR TRAFFIC PARTICIPANTS
PROCEDE ET DISPOSITIF DE DETECTION D'OBSTACLES ET/OU D'USAGERS DE LA ROUTE

(30) Priorität: 14.09.2002 DE 10242808
(43) Veröffentlichungstag der Anmeldung: 15.06.2005
(73) Patentinhaber: ROBERT BOSCH GMBH, 70442 Stuttgart (DE)
(72) Erfinder: MAURER, Markus, 85113 Böhmfeld (DE); KIRCHNER, Alexander, 38448 Wolfsburg (DE); KOPISCHKE, Stephan, 38442 Wolfsburg (DE); MEINECKE, Marc-Michael, 38424 Sassenburg (DE); RANDLER, Martin, 70561 Stuttgart (DE); SCHOLZ, Stefan, 70794 Filderstadt (DE); STÄMPFLE, Martin, 89075 Ulm (DE); WILHELM, Ulf, 71277 Rutesheim (DE); ANKLAM, Carsten, 38104 Braunschweig (DE); MEINKE, Ingo, 38122 Braunschweig (DE); VON HOLT, Volker, 38106 Braunschweig (DE); KÜHNLE, Götz, 71282 Hemmingen (DE)
(86) Internationale Anmeldenummer: PCT/EP2003/010025
(87) Internationale Veröffentlichungsnummer: WO 2004/031801

(56) Entgegenhaltungen:
- EP-A- 0 259 143
- DE-A- 4 040 572
- DE-A- 10 041 769
- US-A- 6 035 053
- US-B1- 6 377 205

## Beschreibung

Die vorliegende Erfindung betrifft ein Verfahren und eine Vorrichtung zur Erkennung von Objekten im Straßenverkehr.

Die US 6,377,205 B1 offenbart ein Verfahren zur Erkennung von Objekten im Straßenverkehr, wobei basierend auf Schwankungen von Messwerten einer Radarreflexamplitude eine Klassifizierung in Bodenobjekte und Luftobjekte vorgenommen wird.

Die US 6,035,053 A offenbart ein Verfahren zur Erkennung von Objekten im Straßenverkehr, wobei eine transversale Geschwindigkeit eines Objekts und ein longitudinaler Abstand des Objekts mit einem ersten und zweiten Schwellwert verglichen werden.

Die EP 0 259 143 A offenbart eine Signalverarbeitungseinrichtung mit Verwendung einer mehrdimensionalen Nachschlagetabelle hinsichtlich Radarsignalen, welche von einem Objekt zu einem Empfänger reflektiert werden.

In der Automobiltechnik werden Radar-Sensoren zunehmend zu Erkennung von Hindernissen oder Verkehrsteilnehmern eingesetzt. Verfahren zur Messung des Abstandes und der Geschwindigkeit eine Objektes sind beispielsweise aus der DE 40 40 572 A1 bekannt. Das ausgesandte Signal wird durch das Objekt reflektiert. Aus dem reflektierten Signal lassen sich Abstand, Relativgeschwindigkeit und Erfassungswinkel ableiten. Für intelligente Fahrsysteme sind jedoch zusätzlich Informationen, wie Breite des Objekts, erforderlich, welche durch ein derartiges Verfahren nicht erfassbar sind.

3D-Radarsensoren zum Erkennen 3-dimensionaler Objekte sind beispielsweise aus der DE 100 41 769 A1 bekannt. Ein derartiger 3D Radarsensor ist mit einem Radararray ausgebildet, umfassend mehrere Radarpixel mit jeweils einen Antennenelement und zwei Gleichrichterdioden. Die Gleichrichterdioden sind so am Ausgang des Antennenelementes angeschlossen, dass ein vom Antennenelement ausgehendes Signal parallel und symmetrisch in einen jeweiligen Diodenpfad einspeisbar ist, wobei an jedem Diodenpfad die Signalspannung abgreifbar ist und jeder Diodenpfad einen Anschluss zur Einspeisung eine Modulationsspannung enthält. Ein derartiger Sensor ist jedoch aufwendig in der Herstellung.

Der Erfindung liegt daher das technische Problem zugrunde, ein Verfahren und eine Vorrichtung zu schaffen, durch welche Objekte 3-dimensional erfassbar sind und die kostengünstig realisierbar sind.

Die Lösung des Problems ergibt sich durch Gegenstände mit den Merkmalen der Ansprüche 1 und 5. Weitere vorteilhafte Ausgestaltungen der Erfindung ergeben sich aus den Unteransprüchen.

Zu einem Einzel-Reflexionszentrum zugehörige Messsignale, werden statistisch ausgewertet, wobei die Auswertung einen Vergleich einer tatsächlichen Schwankung der Meßsignale und eines Erwartungswertes der Schwankung aufgrund der aktuellen Bewegung umfaßt. Jedes Objekt weist eine. Vielzahl von Einzel-Reflexionszentren auf. Aus Meßsignalen aufgrund von Reflexionen an den Einzel-Reflexionszentren sind Abstand, Relativgeschwindigkeit und Erfassungswinkel zu dem zugehörigen Objekt ermittelbar. Die einzelnen Meßsignale werden zu einem gemeinsamen Konsens verknüpft, beispielsweise durch Bildung eines Mittelwerts. Daneben sind auch andere Verfahren denkbar. Die Werte der Meßsignale sind Schwankungen unterworfen. Diese beruhen zum einen auf Änderungen des Abstands und/oder der Orientierung zu dem erkannten Objekt, zum anderen aus Meßungenauigkeiten. Meßungenauigkeiten werden bei bekannten Verfahren durch Glättungsverfahren bereinigt. Dadurch gehen jedoch Informationen verloren. Durch eine statistische Auswertung der Meßsignale der Einzel-Reflexionszentren lassen sich hingegen zusätzliche Informationen gewinnen. Ändert sich der sich aufgrund eines Meßsignals ermittelte Ort eines Einzel-Reflexionszentrums schneller, als dies durch die aktuelle physikalische Bewegung zugelassen ist, so deutet dies in der Regel auf eine Objektbegrenzung hin. Aus dieser Information ist beispielsweise die Breite eines vorangehenden Fahrzeugs ermittelbar.

In einer Ausführungsform umfaßt die statistische Auswertung der Meßsignale eine Clusterbildung. Schwankungen in den Meßsignalen lassen sich beispielsweise aufgrund der prozentualen Abweichung zu einem Vorgängerwert in Gruppen aufteilen. Anhand dieser Gruppen oder Cluster ist eine schnelle Einordnung der Schwankungen in den Meßsignalen möglich.

In einer Ausführungsform der Erfindung werden mindestens zwei Einzel-Reflexionszentren zur Beobachtung zusammengefaßt. Dadurch lassen sich bestimmte Merkmale eines Objekts gezielt beobachten.

In einer weiteren Ausführungsform der Erfindung werden Daten bekannter Objekte bei der Auswertung berücksichtigt. Für die Breite von Kraftfahrzeugen lassen sich minimale und maximale Werte angeben. Wird aufgrund der statistischen Auswertung eine Fahrzeugkante detektiert, so läßt sich die Ausdehnung des Objektes innerhalb dieser Grenzen voraussagen. Durch eine derartige Voraussage läßt sich die weitere Bewertung der Meßsignale verbessern.

In einer weiteren Ausführungsform werden die Informationen für ein Sicherheits- und/oder Komfortsystem aufbereitet. Bevorzugt erfolgt der Einsatz gemeinsam mit einer automatischen Notbremse. Durch die statistische Auswertung der Meßsignale wird die Erkennung von Hindernissen und/oder anderen Verkehrsteilnehmern verbessert. Die verbesserte Information läßt sich in automatischen Notbremseinrichtungen vorteilhaft nutzen. Daneben ist die zusätzliche Information auch für andere Sicherheits- und Komfortsysteme nutzbar, beispielsweise Parkassistenzsysteme oder adaptive cruise control.

Bevorzugt werden Radarsensoren für eine berührungslose Abstandsmessung eingesetzt. Das erfindungsgemäße Verfahren kann aber auch mit einem Lasersystem oder weiteren berührungslosen Verfahren zur Abstandsmessung eingesetzt werden.

Die Erfindung wird nachfolgend anhand eines bevorzugten Ausführungsbeispiels näher erläutert. Die Figuren zeigen:
- Fig. 1: eine Radareinrichtung zur Erkennung eines Objektes und
- Fig. 2: eine Einteilung von Meßsignalen in Cluster.

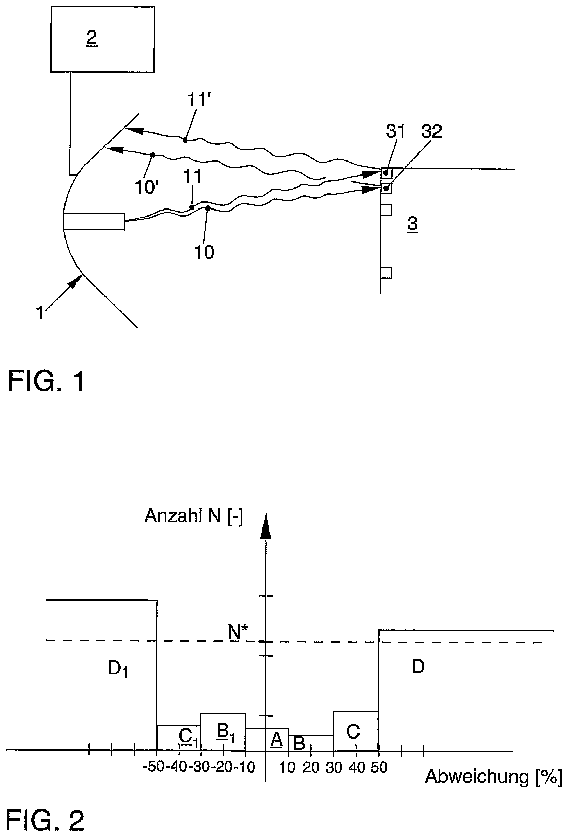

Fig. 1 zeigt eine an einem nicht dargestellten Fahrzeug angebrachte Radareinrichtung 1 mit einer Auswerteeinheit 2 zur Erkennung eines Objektes 3. Die Radareinrichtung 1 sendet Signale 10, 11 aus, welche von Einzel-Reflexionszentren 31, 32 des Objekts 3 reflektiert werden. Die reflektierten Signale 10', 11' werden durch die Radareinrichtung empfangen und die zugehörigen Meßsignale in der Auswerteeinheit 2 weiterverarbeitet. Anhand der Meßsignale lassen sich der Abstand, die Relativgeschwindigkeit und die Orientierung des Fahrzeugs zu dem Objekt 3 bestimmen. Aufgrund der Bewegung des Fahrzeugs und/oder des Objektes 3 kommt es zu Schwankungen zweier durch das selbe Einzel-Reflexionszentrum 31, 32 zu verschiedenen Zeiten reflektierter Signale 10', 11'. Sind die Schwankungen gering, so wird das zugehörige Meßsignal entsprechend geglättet. Größere Schwankungen zeigen eine Veränderung der relativen Lage des zu erkennenden Objektes 3 auf. Signale 11 treffen auf ein Einzel-Reflexionszentrum 31 an einer Objektkante. Schon bei einer geringe Veränderung der relativen Objektlage treffen die Signale 11 nicht weiter auf das Einzel-Reflexionszentrum 31. Das aufgenommene Meßsignal des reflektierten Signals 11' ist daher starken Schwankungen unterworfen. Diese Schwankungen werden durch die Auswerteeinheit 2 erfaßt und statistisch ausgewertet. Die statistische Auswertung ist nachfolgend anhand von Fig. 2 erläutert.

Fig. 2 zeigt beispielhaft eine Einteilung von Messsignalen in Cluster A, B, B1, C, C1, D, D1. Die Einteilung erfolgt dabei aufgrund einer prozentualen Abweichung. Dabei werden positive und negative Abweichungen unterschieden. Denkbar ist auch eine Aufteilung in quadratische Abweichungen, welche unabhängig von einem Vorzeichen sind, den Betrag der Abweichungen u.a. Verschiedene Cluster A, B, B1 usw. können dabei gleichgroße Bereiche abdecken, beispielsweise Cluster A von -10% bis +10% und Cluster B von 10% bis 20%. Die Bereiche können sich jedoch auch unterscheiden. Abweichungen größer bzw. kleiner 50% sind in einem Cluster D bzw. D1 zusammengefasst. Eine Abweichung, welche diesen Clustern D, D1 zuzuordnen ist, besitzt keine physikalische Entsprechung. D.h. derartige Veränderungen der relativen Lage zwischen Objekt und Fahrzeug müssen anders erklärt werden. Sie können zum einen aus Messfehlern resultieren, zum anderen weisen sie darauf hin, dass das entsprechende Einzel-Reflexionszentrum beispielsweise auf einer Objektkante liegt. Übersteigen die Anzahl N der Messsignale, welche einem Cluster D bzw. D1 zugeordnet werden, einen Schwellwert N*, so wird daraus auf eine Unregelmäßigkeit in der Objektkontur, nämlich eine Kante, geschlossen. Je niedriger der Schwellwert N* gewählt wird, desto früher ist eine Abweichung detektierbar.
Bei einem Schwellwert von N* = 1 sind Kanten sofort detektierbar. Messungenauigkeiten können jedoch die Signale verfälschen, so dass ein Schwellwert N* > 1 gewählt ist. Der optimale Schwellwert N* ist je nach Messgenauigkeit des Systems zu wählen.
Anstelle der Clusterbildung können auch andere statistische Auswerteverfahren eingesetzt werden. Weiter sind neben einer statistische Auswertung auch andere Auswerteverfahren denkbar, welche eine starke Schwankung in den Messsignalen identifizieren und diese für einen zusätzlichen Informationsgewinn analysieren. Die Verwendung der aus den Messsignalen gewonnenen zusätzlichen Information über zu erkennende Objekte ist von hohem Nutzen in Sicherheits- und Komfortsystemen.

## Patentansprüche

1. Verfahren zur Erkennung von Objekten im Straßenverkehr, wobei ein zu erkennendes Objekt (3) mindestens ein Einzel-Reflexionszentrum (31, 32) aufweist und aus Messsignalen aufgrund von Reflexionen an dem Einzel-Reflexionszentrum (31, 32) Abstand, Relativgeschwindigkeit und Erfassungswinkel zu dem Objekt (3) ermittelbar sind,
wobei
die Messsignale statistisch ausgewertet werden,
die Auswertung einen Vergleich einer tatsächlichen Schwankung der Messsignale und eines Erwartungswertes der Schwankung aufgrund einer aktuellen Bewegung umfasst, **dadurch gekennzeichnet, dass** auf eine Objektkante in der Objektkontur geschlossen wird, wenn die Anzahl (N) der Messsignale welche einer Schwankung zugeordnet werden, die größer als ein vorgegebener Wert ist, einen vorbestimmten Schwellwert (N*) überschreitet; wobei der vorbestimmte Schwellwert (N*) größer als Eins gewählt wird; und
wobei Daten der Breite bekannter Objekte (3) bei der Auswertung zum Voraussagen der Ausdehnung des Objektes (3) berücksichtigt werden.

2. Verfahren nach Anspruch 1, **dadurch gekennzeichnet, dass** die statistische Auswertung der Messsignale eine Clusterbildung umfasst.

3. Verfahren nach Anspruch 1 oder 2, **dadurch gekennzeichnet, dass** mindestens zwei Einzel-Reflexionszentren (31, 32) zur Beobachtung zusammengefasst werden.

4. Verfahren nach einem der genannten Ansprüche, **dadurch gekennzeichnet, dass** die Informationen für ein Sicherheits- oder Komfortsystem aufbereitet werden.

5. Vorrichtung zur Erkennung von Objekten im Straßenverkehr, wobei ein zu erkennendes Objekt (3) mindestens ein Einzel-Reflexionszentrum (31, 32) aufweist, umfassend eine Sensoreinrichtung, welche mit einem Sendemittel zum Senden von Signalen (10, 11) und einem Empfangsmittel zum Empfangen von an dem Einzel-Reflexionszentrum (31, 32) reflektierten Signalen (10, 11) als Messsignale ausgebildet ist, und eine Auswerteeinheit (2), wobei aus den Messsignalen Abstand, Relativgeschwindigkeit und Erfassungswinkel zu dem Objekt (3) ermittelbar sind,
wobei
durch die Auswerteeinheit (2) die Messsignale statistisch ausgewertet werden, durch die Auswerteeinheit eine tatsächliche Schwankung der Messsignale und ein Erwartungswert der Schwankung aufgrund einer aktuellen Bewegung verglichen werden, und **dadurch gekennzeichnet, dass** durch die Auswerteeinheit (2) auf eine Objektkante in der Objektkontur geschlossen wird, wenn die Anzahl (N) der Messsignale, welche einer Schwankung zugeordnet werden, die größer als ein vorgegebener Wert ist, einen vorbestimmten Schwellwert (N*) überschreitet;
wobei der vorbestimmte Schwellwert (N*) größer als Eins gewählt ist;
wobei die Auswerteeinheit (2) mit einer Datenbank ausgebildet ist; und
wobei die Datenbank Daten der Breite bekannter Objekte (3) umfasst und diese bei der Auswertung zum Voraussagen der Ausdehnung des Objektes (3) berücksichtigt werden.

6. Vorrichtung nach Anspruch 5, **dadurch gekennzeichnet, dass** durch die Auswerteeinheit (2) die Messsignale in Cluster (A, B, B1, C, C1, D, D1) eingeteilt werden.

7. Vorrichtung nach Anspruch 5 oder 6, **dadurch gekennzeichnet, dass** in der Auswerteeinheit (2) mindestens zwei Einzel- Reflexionszentren (31, 32) zur Beobachtung zusammengefasst werden.

8. Vorrichtung nach einem der Ansprüche 5 bis 7, **dadurch gekennzeichnet, dass** die Auswerteeinheit (2) mit einem Sicherheits- oder Komfortsystem zum Austausch von Daten verbindbar ist.

9. Vorrichtung nach einem der Ansprüche 5 bis 8, **dadurch gekennzeichnet, dass** die Sensoreinheit als Radarsensor (1) oder Lidarsensor ausgebildet ist.

## Claims

1. Method for detecting objects in the road traffic, an object (3) to be detected having at least one individual reflection centre (31, 32) and the distance, relative speed and detection angle with respect to the object (3) being able to be determined from measurement signals on the basis of reflections at the individual reflection centre (31, 32),
the measurement signals being statistically evaluated, the evaluation comprising a comparison of an actual fluctuation of the measurement signals with an expected value of the fluctuation on the basis of a current movement, **characterized in that** an object edge in the object contour is inferred if the number (N) of measurement signals assigned to a fluctuation, which is greater than a predefined value, exceeds a predetermined threshold value (N*);
the predetermined threshold value (N*) being selected to be greater than one; and
data relating to the width of known objects (3) being taken into account in the evaluation for the purpose of predicting the extent of the object (3).

2. Method according to Claim 1, **characterized in that** the statistical evaluation of the measurement signals comprises a cluster formation.

3. Method according to Claim 1 or 2, **characterized in that** at least two individual reflection centres (31, 32) are combined for observation.

4. Method according to one of the preceding claims, **characterized in that** the information is preprocessed for a safety or comfort system.

5. Apparatus for detecting objects in the road traffic, an object (3) to be detected having at least one individual reflection centre (31, 32), comprising a sensor device, which is designed with a transmitting means for transmitting signals (10, 11) and a receiving means for receiving signals (10, 11) reflected at the individual reflection centre (31, 32) as measurement signals, and an evaluation unit (2), the distance, relative speed and detection angle with respect to the object (3) being able to be determined from the measurement signals, the evaluation unit (2) statistically evaluating the measurement signals, the evaluation unit comparing an actual fluctuation of the measurement signals with an expected value of the fluctuation on the basis of a current movement, **characterized in that** the evaluation unit (2) infers an object edge in the object contour if the number (N) of measurement signals assigned to a fluctuation, which is greater than a predefined value, exceeds a predetermined threshold value (N*);
the predetermined threshold value (N*) being selected to be greater than one;
the evaluation unit (2) being designed with a database; and
the database comprising data relating to the width of known objects (3) and these data being taken into account in the evaluation for the purpose of predicting the extent of the object (3).

6. Apparatus according to Claim 5, **characterized in that** the evaluation unit (2) divides the measurement signals into clusters (A, B, B1, C, C1, D, D1).

7. Apparatus according to Claim 5 or 6, **characterized in that** at least two individual reflection centres (31, 32) are combined in the evaluation unit (2) for observation.

8. Apparatus according to one of Claims 5 to 7, **characterized in that** the evaluation unit (2) can be connected to a safety or comfort system for the purpose of interchanging data.

9. Apparatus according to one of Claims 5 to 8, **characterized in that** the sensor unit is in the form of a radar sensor (1) or a lidar sensor.

## Revendications

1. Procédé de reconnaissance d'objets dans la circulation, dans lequel un objet à reconnaître (3) comporte au moins un centre réflexion individuel (31, 32) et la distance, la vitesse relative et l'angle de détection par rapport à l'objet (3) peuvent être déterminés à partir de signaux de mesure sur la base de réflexions sur le centre réflexion individuel (31, 32), dans lequel les signaux de mesure sont évalués de manière statistique, l'évaluation comprend une comparaison d'une variation effective des signaux de mesure et d'une valeur attendue de la variation due à un mouvement actuel, **caractérisé en ce qu'**une arête d'objet est déduite dans le contour d'objet lorsque le nombre (N) des signaux de mesure qui sont associés à une variation supérieure à une valeur prédéterminée dépasse une valeur de seuil prédéterminée (N*) ;
dans lequel la valeur de seuil prédéterminée (N*) est sélectionnée de manière à être supérieure à 1 ; et
dans lequel des données concernant la largeur d'objets connus (3) sont prises en compte lors de l'évaluation pour prédire l'extension de l'objet (3).

2. Procédé selon la revendication 1, **caractérisé en ce que** l'évaluation statistique des signaux de mesure comprend une mise en grappes.

3. Procédé selon la revendication 1 ou 2, **caractérisé en ce qu'**au moins deux centres de réflexion individuels (31, 32) sont regroupés aux fins de l'observation.

4. Procédé selon l'une quelconque des revendications précédentes, **caractérisé en ce que** les informations sont préparées pour le système de sécurité ou de confort.

5. Dispositif de reconnaissance d'objets dans la circulation, dans lequel un objet à reconnaître (3) comporte au moins un centre réflexion individuel (31, 32), comprenant un dispositif de détection qui est réalisé de manière à comporter un moyen d'émission destiné à émettre des signaux (10, 11) et un moyen de réception destiné à recevoir des signaux (10, 11) réfléchis sur le centre réflexion individuel (31, 32) en tant que signaux de mesure, et une unité d'évaluation (2), dans lequel la distance, la vitesse relative et l'angle de détection par rapport à l'objet (3) peuvent être déterminés à partir des signaux de mesure, dans lequel les signaux de mesure sont évalués de manière statistique par l'unité d'évaluation (2), et une variation effective des signaux de mesure et une valeur attendue de la variation due à un mouvement actuel sont comparées par l'unité d'évaluation, et
**caractérisé en ce que** l'unité d'évaluation (2) déduit une arête d'objet dans le contour d'objet lorsque le nombre (N) des signaux de mesure qui sont associés une variation supérieure à une valeur prédéterminée dépasse une valeur de seuil prédéterminée (N*) ;
dans lequel la valeur de seuil prédéterminée (N*) est sélectionnée de manière à être supérieure à 1 ;
dans lequel l'unité d'évaluation (2) est réalisée de manière à comporter une base de données ; et
dans lequel la base de données comprend des données concernant la largeur d'objets connus (3), lesquelles données sont prises en compte lors de l'évaluation effectue pour prédire l'extension de l'objet (3).

6. Dispositif selon la revendication 5, **caractérisé en ce que** les signaux de mesure sont subdivisés en grappes (A, B, B1, C, C1, D, D1) par l'unité d'évaluation (2).

7. Dispositif selon la revendication 5 ou 6, **caractérisé en ce qu'**au moins deux centres de réflexion individuels (31, 32) sont regroupés dans l'unité d'évaluation (2) aux fins de l'observation.

8. Dispositif selon l'une quelconque des revendications 5 à 7, **caractérisé en ce que** l'unité d'évaluation (2) peut être reliée à un système de sécurité ou de confort à des fins d'échange de données.

9. Dispositif selon l'une quelconque des revendications 5 à 8, **caractérisé en ce que** l'unité de détection est réalisée en tant que capteur radar (1) ou que capteur lidar.
